# EUROPÄISCHE PATENTSCHRIFT

(11) **EP 1 598 517 B1**
(45) Veröffentlichungstag und Bekanntmachung des Hinweises auf die Patenterteilung: **30.05.2012**
(21) Anmeldenummer: 05009936.5
(22) Anmeldetag: 06.05.2005
(51) Int. Cl.: B60J 1/20, E06B 9/60

(54) **Rollo mit Spiralfederantrieb**
Roller blind with coil spring motor
Volet roulant avec entraînement par ressort spiral

(30) Priorität: 19.05.2004 DE 102004024682
(43) Veröffentlichungstag der Anmeldung: 23.11.2005
(73) Patentinhaber: BOS GmbH & Co. KG, 73760 Ostfildern (DE)
(72) Erfinder: Hansen, Melf, 75053 Gondelsheim (DE); Schimko, Danja, 73732 Esslingen (DE); Thürnau, Christian, 73087 Boll (DE)
(74) Vertreter: Rüger, Barthelt & Abel

(56) Entgegenhaltungen:
- EP-A- 0 652 136
- DE-A1- 3 631 488
- US-A- 4 139 231

## Beschreibung

Bei den heute weit verbreiteten Rollos für Kraftfahrzeuge wird üblicherweise ein Federmotor verwendet, um die Wickelwelle des Rollos im Sinne eines Aufwickelns der Rollobahn vorzuspannen. Der Federmotor wird von einer Schraubenfeder gebildet, die im Inneren der Wickelwelle untergebracht ist.

Man hat in der Vergangenheit überwiegend diese Lösung gewählt, weil sich die Wickelwelle aufgrund ihrer Rohrform zwanglos als Gehäuse für den Federmotor anbietet. Es wurde davon ausgegangen, dass man hier platzsparend den Federmotor unterbringen kann, ohne größere Probleme entstehen zu lassen.

Zwischen der voll ausgezogenen Stellung der Rollobahn und der vollständig eingefahrenen Stellung, in der die Rollbahn weitgehend auf der Wickelwelle aufgewickelt ist, liegen ca. 10 bis 15 Umdrehungen der Wickelwelle. Es versteht sich, dass diese 10 bis 15 Umdrehungen der Wickelwelle in einen mittleren Vorspannungsbereich des Federmotors gelegt werden müssen, damit in den beiden Endzuständen eine vernünftige Vorspannung herrscht. Würden die 10 Umdrehungen an den Anfang des Betriebsbereiches des Federmotors gelegt werden, wäre die Vorspannkraft im aufgewickelten Zustand zu klein. Lägen sie am Ende, wäre bei voll ausgefahrener Rollobahn die Vorspannung zu groß. Hieraus ergibt sich, dass der Federmotor auch bei vollständig aufgewickelter Rollobahn mehrere Umdrehungen, ca. 5 bis 6 Umdrehungen, aufgewickelt sein muss, bezogen auf den vollständig entspannten Zustand des Federmotors.

Umgekehrt benötigt der Federmotor am Ende des Aufwickelvorgangs noch einen Rest, um den er theoretisch weiter aufgezogen werden könnte.

Diese Forderung ergibt sich aus der speziellen Gestalt des Federmotors unter Verwendung einer Schraubenfeder.

Ein weiterer Nachteil bei der Unterbringung der Schraubenfeder in der Wickelwelle ergibt sich aus der erforderlichen Länge, damit die oben beschriebenen Randbedingungen eingehalten werden können. Zufolge der Länge der Schraubenfeder besteht die Gefahr des Klapperns, d.h. die Federwindungen schlagen im Inneren der Wickelwelle an, weil die Schraubenfeder durch die Fahrzeugerschütterungen zum Schwingen quer zur Längsachse der Wickelwelle angeregt wird.

Um das Anschlagen der Federwindungen zu vermeiden hat man bislang das Innere der Wickelwelle mit einer großen Portion Fett gefüllt, das als Dämpfungsmaterial dient.

Eine günstigere Charakteristik zeigt eine Spiralfeder. Bei einer Spiralfeder genügt es, wenn am Anfang der Betriebskurve eine gewissen Spannung aufrecht erhalten bleibt. Gegen Ende des Betriebswegs steigt die Spannung lediglich unmittelbar am Ende abrupt an. Bis zu diesem Betriebspunkt zeigt das Drehmoment des Federmotors unter Verwendung einer Spiralfeder einen allmählichen relativ linearen Anstieg.

Es ist deswegen auch aus der DE 36 31 488 A1 bekannt, eine Laderaumabdeckung für ein Kraftfahrzeug mit Hilfe eines Federmotors vorzuspannen.

Die Laderaumabdeckung weist als Gehäuse zwei Endkappen auf, die teilweise becherartig den Wickel auf der Rollowelle umgeben. Die Kappen sind zum Ausziehen der Rollobahn entsprechend mit Schlitzen versehen. Im mittleren Bereich der Rollobahn liegt der Wickel frei.

Eine der Endkappen enthält seitlich neben, d.h. vor dem Stirnende der Wickelwelle, eine Spiralfeder. Das innere Federende ist auf einem Zapfen der Wickelwelle verankert. Das äußere Federende ist in einem Hohlraum der Endkappe festgesetzt. Die Montage ist verhältnismäßig aufwändig, weil der becherförmige Teil des Federgehäuses mit in dem becherförmigen Teil, der das Rollogehäuse darstellt, einstückig ist. Über die Art und Weise wie der Zapfen mit der rohrförmigen Wickelwelle verbunden ist, ist der Druckschrift nichts zu entnehmen.

Weiter ist aus der EP 0 652 136 A2 eine Rolloanordnung für Kraftfahrzeuge mit einer Rollobahn und mit einer Wickelwelle bekannt, an der mit einer Kante die Rollobahn befestigt ist. An der Wickelwelle sind formschlüssig wirkende Mitnehmermittel vorgesehen, um die Wickelwelle im Sinne eines Aufwickelns der Rollobahn auf die Wickelwelle in Umdrehungen zu versetzen. Eine Spiralfederdient dazu, die Wickelwelle im Sinne des Aufwickelns der Rollobahn auf die Wickelwelle vorzuspannen. Es ist ein eigenständiges Spiralfedergehäuse vorgesehen, in dem die Spiralfeder an einem Ende verankert ist. Außerdem ist eine Kuppelwelle vorgesehen, die mit einem andren Ende der Spiralfeder gekuppelt ist und die formschlüssig wirkenden Mitnehmermittel zur kinematische Verbindung mit den Mitnehmermitteln der Wickelwelle aufweist.

Auch diese Lösung stellt sich relativ aufwändig dar.

Ausgehend hiervon ist es Aufgabe der Erfindung, eine Rolloanordnung für Kraftfahrzeuge zu schaffen, die eine bei der der Federmotor leichter zu montieren ist und die klapperfrei aufgebaut ist.

Diese Aufgabe wird erfindungsgemäß mit der Rolloanordnung mit den Merkmalen des Anspruches 1 gelöst.

Bei der neuen Rolloanordnung ist, wie beim Stand der Technik üblich, eine Wickelwelle vorgesehen, an der mit einer Kante die Rollobahn befestigt ist. Als Vorspanneinrichtung dient eine Spiralfeder um die Wickelwelle im Sinne des Aufwickelns der Rollobahn vorzuspannen. Die Spiralfeder sitzt in einem eigenständigen Spiralfedergehäuse, in dem die Spiralfeder einends verankert ist. Das andere Ende der Spiralfeder ist mit einer Kuppelwelle verbunden. Die Kuppelwelle ist mit Mitnehmern versehen, um die Kuppelwelle mit den entsprechenden Mitnehmermitteln der Wickelwelle zu verbinden.

Die Eigenständigkeit des Federgehäuses ermöglicht eine Vormontage oder Vorproduktion der Vorspanneinrichtung der neuen Rolloanordnung. Die vormontierte Einheit kann beliebig später oder an einem anderen Ort mit dem Rollogehäuse und der Wickelwelle zu einer fertigen Rolloeinheit komplettiert werden.

Außerdem kann eine identische Antriebseinheit mit einer Vielzahl unterschiedlicher Wickelwellen und/oder Rollogehäusen kombiniert werden.

Da bei der Montage der Rollobahnen an der Wickelwelle durchaus Toleranzen entstehen können, unterliegt die Lage der formschlüssigen Mitnehmermittel einer gewissen Toleranz, bezogen auf die Winkelstellung. Durch die Verwendung der formschlüssigen Mitnehmermittel lässt sich bei der Montage der endgültige Fehler auf ein Minimum reduzieren, indem der kleinste Verdrehwinkel der Wickelwelle gewählt wird, bei dem eine Montage möglich ist.

Außerdem gewährleisten die formschlüssig zusammenwirkenden Mitnehmermittel eine extrem kleine Montagekraft in Axialrichtung, wenn das Spiralfedergehäuse zusammen mit der Spiralfeder an der Wickelwelle montiert wird.

Die Rollobahn kann bei der neuen Anordnung, je nach Anwendungsfall, eine Folie oder ein Gewirke sein, beispielsweise im Falle eines Fensterrollos, oder es kann sich um ein Netz handeln, wenn die Anordnung als Trenngitter eingesetzt wird. Auch eine Laderaumabdeckung ist möglich, wobei dann die Rollobahn aus einer undurchsichtigen Folie besteht.

Die Wickelwelle kann an einem Ende mit einer Lageranordnung versehen sein, mit deren Hilfe die Wickelwelle an dem betreffenden Ende in einer stationären Lageranordnung gelagert ist, während das andere Lager von dem Federgehäuse und der Kupplungswelle gebildet ist.

Um eine größere Rückzugskraft zu bekommen ist es auch möglich, derartige Federgehäuse mit Spiralfeder an beiden Enden der Wickelwelle vorzusehen, wodurch das zuvor erwähnte ortsfeste Lager entfällt.

Das ortsfeste Lager kann in dem Rollogehäuse vorhanden sein, oder stationär in der Fahrzeugkarosserie.

Die Mitnehmermittel an der Wickelwelle umfassen dort eine koaxiale Öffnung, die einen von der Kreisform abweichenden Querschnitt aufweist. Sehr einfach wird die Anordnung, wenn die Mitnehmermittel von einer zu einem Flachkant komplementären Öffnung gebildet sind.

Die Öffnung ist vorteilhafterweise in einer Buchse ausgebildet, die starr und fest in der rohrförmigen Wickelwelle sitzt.

Als Spiralfeder kommt sowohl eine Bandfeder als auch eine Drahtfeder in Frage. Die Drahtfeder hat den Vorteil, in axialer Richtung sehr wenig Platz zu erfordern, eignet sich dafür aber nur für solche Anordnungen, bei denen eine geringe Rückzugskraft benötigt wird. Die Bandfeder kann eine größere Rückzugskraft erzeugen, nimmt dafür aber etwas mehr Platz in axialer Richtung in Anspruch.

Zweckmäßigerweise ist das Federgehäuse stationär. Die Spiralfeder ist mit ihrem äußeren Federende in dem Spiralfedergehäuse verankert, während das innere Federende mit der Kuppelwelle verbunden ist.

Das Spiralfedergehäuse weist eine Lagerbohrung zum Durchtritt der Kuppelwelle auf. Die Lagerbohrung dient gleichzeitig auch als echtes Lager zur Radiallagerung der Wickelwelle.

Im montierten Zustand kann an sich die Kuppelwelle in axialer Richtung nicht so weit auswandern, als dass die Verbindung entweder zur Spiralfeder oder zu der Wickelwelle unterbrochen wird. Gleichwohl kann die hin und her wandernde Wickelwelle unter Umständen dafür sorgen, dass die Spiralfeder die recht fest mit der Kuppelwelle verbunden ist, durch die Wickelwelle gegen eine Wand des Gehäuses gedrückt wird und dort schabt.

Um diesen Effekt auszuschließen ist die Kuppelwelle für sich axial gesichert in dem Spiralfedergehäuse gelagert. Dazu ist die Kuppelwelle mit einer umlaufenden Ringnut versehen, in die ein tangential verlaufender Bolzen eingreift. Dieser Bolzen kann auch in radialer Richtung, bezogen auf die Kuppelwelle, federbelastet sein, um die Wickelwelle in einer Richtung radial zu verspannen, damit jegliche Klappergefahr ausgeschlossen ist.

Außerdem ermöglicht der federbelastete Bolzen eine Axialverschiebung der Kuppelwelle, wenn dies zum Entriegeln einer Sperreinrichtung erforderlich ist.

Die Vormontage wird besonders einfach, wenn der Vorspanneinrichtung, bestehend aus Spiralfedergehäuse, Spiralfeder und Kuppelwelle eine Sperreinrichtung zugeordnet ist. Die Sperreinrichtung dient dazu, die Feder im aufgezogenen Zustand zu arretieren. Dies geschieht werkseitig und vermeidet Montagefehler beim späteren Zusammenbau. Es wird den Monteuren beim Zusammenbau die Arbeit abgenommen, die Spiralfeder auf den erforderlichen Wert aufzuziehen.

Die Sperreinrichtung kann im einfachsten Falle von einem Stift gebildet sein, der durch eine Öffnung in der Kuppelwelle führt und im Spiralfedergehäuse verankert ist. Nach dem Zusammenbau mit der Wickelwelle wird der Stift gezogen, womit die Kraft der Spiralfeder frei wird und auf die Wickelwelle einwirkt.

Eine andere Möglichkeit besteht darin, die Kuppelwelle mit einem Profil zu versehen, das zu einer entsprechend profilierten Öffnung in dem Spiralfedergehäuse komplementär ist. Nach dem Zusammenbau mit der Wickelwelle und dem Rollogehäuse wird die Kuppelwelle axial verschoben, wodurch sie aus der profilierten Öffnung des Spiralfedergehäuses frei kommt und nunmehr frei drehbar ist.

Das Spiralfedergehäuse besteht im einfachsten Falle aus einem Becher mit einem Deckel. In dem Boden des becherförmigen Teils ist die Lagerbohrung für die Kuppelwelle angeordnet.

Im Übrigen sind Weiterbildungen der Erfindung Gegenstand von Unteransprüchen.

Beim Durchlesen der Figurenbeschreibung wird klar, dass eine Reihe von Abwandlungen möglich sind. Diese Abwandlungen brauchen im Einzelnen nicht erläutert zu werden und ergeben sich aus dem jeweiligen Randbedingungen, die durch die Einbaulage und die sonstigen Umstände verursacht werden.

In der Zeichnung ist ein Ausführungsbeispiel des Gegenstandes der Erfindung dargestellt. Es zeigen:
- Fig. 1: ein Fahrzeug in einer Heckansicht, unter Veran- schaulichung der erfindungsgemäßen Rolloanordnung als Heckscheibenrollo,
- Fig. 2: das Heckscheibenrollo nach Fig. 1, in einer ver- einfachen Prinzipdarstellung,

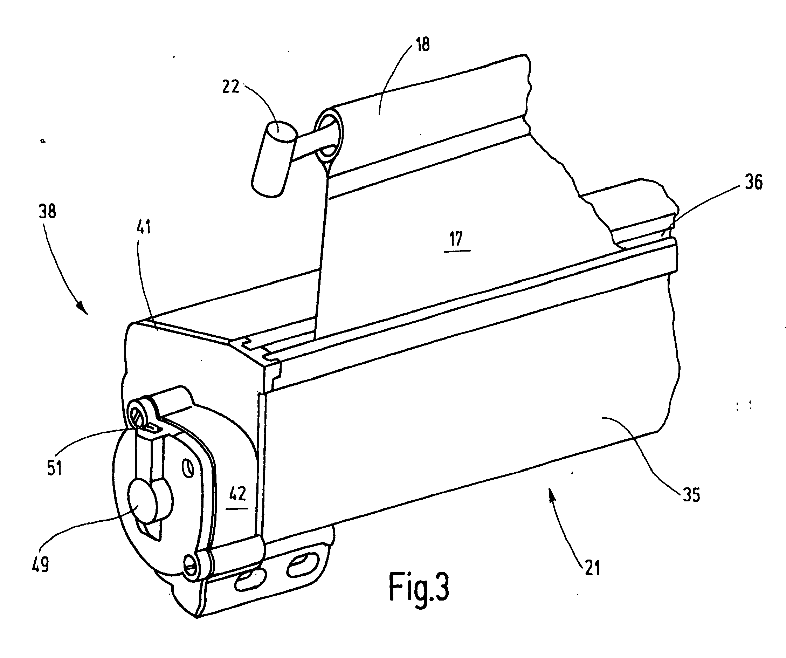

- Fig. 3: das Gehäuse der Rolloanordnung nach Fig. 1, in einer abgebrochenen perspektivischen Darstellung,

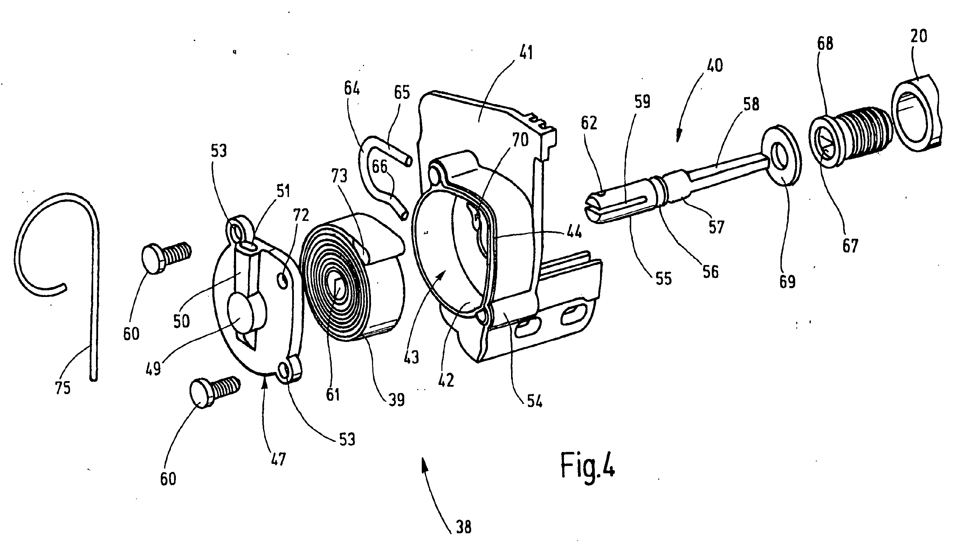

- Fig. 4: eine Explosionsdarstellung der Vorspanneinrich- tung in einer Sicht entsprechend Fig. 2,
- Fig. 5: der Vorspanneinrichtung in einer Explosionsdar- stellung aus der Sicht des Rollogehäuses,
- Fig. 6 und 7: ein anderes Ausführungsbeispiel der Vor- spanneinrichtung mit einer geänderten Sper- reinrichtung und
- Fig. 8: zwei weitere Anwendungsbeispiele für die erfin- dungsgemäße Vorspanneinrichtung.

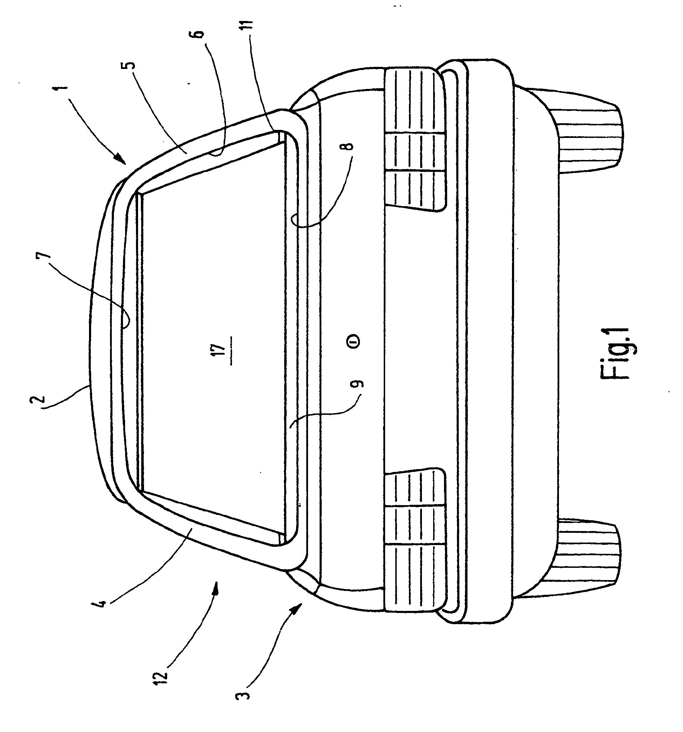

Figur 1 zeigt in einer schematischen Darstellung die Rückansicht eines PKW 1 mit einem Dach 2, einem Kofferraum 3 sowie zwei C-Säulen 4 und 5.

Zwischen den beiden C-Säulen 4 und 5 befindet sich eine Heckfensteröffnung 6, die nach oben von einer Dachhinterkante und nach unten von einer Fensterbrüstung 8 begrenzt ist. In der Heckfensteröffnung 6 sitzt in bekannter Weise eine Heckscheibe.

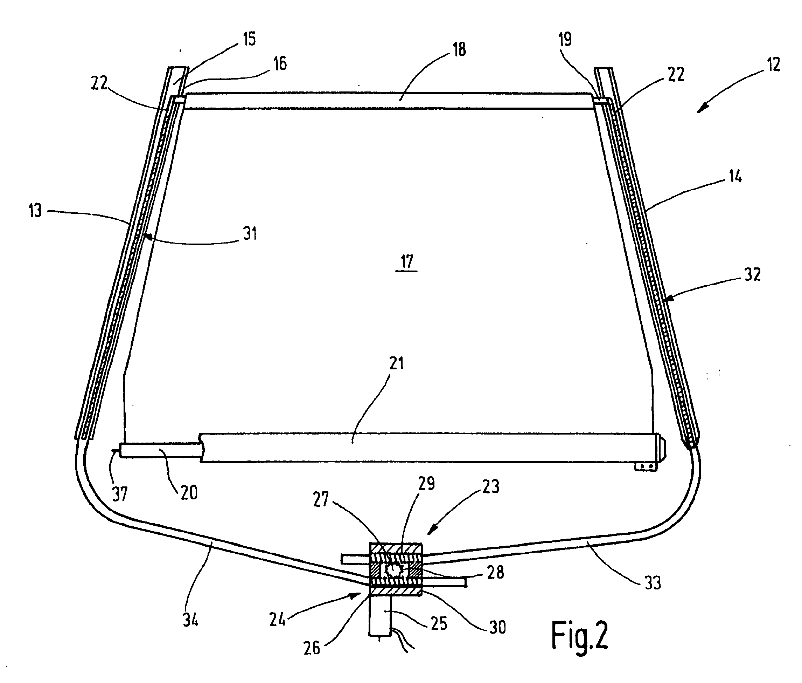

Im Inneren des PKW 1 befindet sich vor der Innenseite der Heckscheibe eine Hutablage 9, die sich zwischen der Fensterunterkante 8 und eine in der Figur nicht erkennbaren Rücksitzlehne horizontal erstreckt. In der Hutablage 9 verläuft ein gerader Auslaufschlitz 11. Der Auslaufschlitz 11 gehört zu einem Heckfensterrollo 12, das in Figur 2 stark schematisiert in einer Draufsicht gezeigt ist.

Zu dem Heckfensterrollo 12 gehören zwei Führungsschienen 13 und 14, die neben der Fensterkante in den C-Säulen 4 und 5 versenkt angeordnet sind. Die Führungsschienen enthalten jeweils eine Führungsnut 15, die sich über einen Schlitz 16 in Richtung auf die jeweils gegenüber liegende Führungsschiene 13 bzw. 14 öffnet.

Zu dem Heckfensterrollo 12 gehört ferner eine Rollobahn 17, die an einer Kante 18 zu einer schlauchförmigen Tasche umgeformt ist, in der ein Auszugsprofil 19 steckt.

Das Heckscheibenrollo 12 umfasst ferner eine Wickelwelle 20, die unterhalb des Auslaufschlitzes 11 unter der Hutablage 9 in einem Gehäuse 21 drehbar gelagert ist. An der Wickelwelle 20 ist mit einer Kante, die zu der Kante 18 parallel ist, die Rollobahn 17 befestigt.

Das Auszugsprofil 19 ist teleskopartig zusammengesteckt und deswegen in axialer Richtung zu verlängern und zu verkürzen. Die am weitesten außen liegenden Enden tragen Führungsglieder 22, die in den Nuten 15 längsverschieblich geführt sind. Mit einem verjüngten Halsabschnitt ragt das Führungsprofil 19 durch die Schlitze 16 hindurch, die sich im Anschluss daran erweitern, so dass die Führungsglieder 22 durch den in Längsrichtung verlaufenden Schlitzes 16 nicht herausziehbar sind.

Um die Rollobahn 17 auszuziehen, ist eine Antriebseinrichtung 23 vorgesehen, die einen Getriebemotor 24 umfasst, der einen permanent erregten Gleichstrommotor 25 sowie ein Getriebe 26 aufweist. Auf einer Ausgangswelle 27 sitzt drehfest ein Ritzel 28. Tangential an dem Ritzel 28 führen zwei Bohrungen 29 und 30 vorbei, die als Führung für biegsame Schubglieder 31 und 32 dienen. Die Schubglieder, sogenannte Suflexwellen, setzen sich aus einem Kern mit kreisförmigem Querschnitt zusammen, der auf seiner Außenumfangsfläche eine schraubenförmig verlaufende Rippe trägt. Auf diese Weise ähneln die Schubglieder 31 und 32 schräg verzahnten Zahnstangen, wobei sich allerdings die Verzahnung um den gesamten Umfang herum erstreckt. Die Teilung dieser Verzahnung ist an die Verzahnung des Ritzels 28 angepasst. Zwischen den Schubgliedern 31 und 32 und dem Ritzel 28 ist ein formschlüssiges Zusammenwirken gewährleistet. Die Bohrungen 29 und 28 verlaufen auf diametral gegenüberliegenden Seiten, so dass die mit dem Ritzel 28 kämmenden Schubglieder 31 und 32 zu entgegen gesetzten Seiten vorgeschoben werden, wenn das Ritzel 28 in Umdrehung versetzt wird.

Die beiden Schubglieder 31 uns 32 führen von dem Ritzel 28, geführt durch Führungsrohre 33 und 34, jeweils zu dem unteren Ende der zugehörigen Führungsschiene 13 bzw. 14. Mit Hilfe der Führungsrohre 33 und 34 sind die Schubglieder 31 und 32 ausknickfest geführt und können so eine Schubkraft übertragen. Mit Ihren Enden wirken sie auf die Führungsglieder 22 ein.

Zu dem Rollogehäuse 21 gehört ein rohrförmiges Mittelstück 35, das die Wickelwelle 20 beherbergt. Das Mittelstück 35 weist ein über die Längsrichtung durchlaufenden Schlitz 36 auf, der als Auslaufschlitz dient, durch den die Rollobahn 17 nach außen aus dem Gehäuse 21 austritt.

Das rohrförmige Mittelstück 35 ist an dem abgebrochenen Ende von einem nicht weiter veranschaulichten Deckel verschlossen, der eine Lagerbohrung für einen Lagerzapfen 37 der Wickelwelle 20 enthält. Auf dem gegenüberliegenden Ende ist auf dem rohrförmigen Mittelstück 35 ein Spiralfedergehäuse 38 befestigt. Das Spiralfedergehäuse 38 beherbergt eine Spiralfeder 39, die über eine aus dem Spiralfedergehäuse 38 herausragende Kuppelwelle 40 formschlüssig mit der Wickelwelle 20 gekuppelt ist.

Das Spiralfedergehäuse 38 umfasst eine im Wesentlichen ebene Grundplatte 41, deren eine Flachseite dem Mittelstück 35 zugekehrt ist und deren andere Flachseite eine in sich geschlossene Seitenwand 42 trägt, die einstückig angeformt ist. Die Seitenwand 42 bildet, zusammen mit dem umgrenzten Bereich der Grundplatte 41, einen becherförmigen Innenraum 43, in dem die Spiralfeder 39 untergebracht ist. Koaxial zu der Gehäusewand 42 ist in der Grundplatte 41 eine Lagerbohrung 44 enthalten, die der Lagerung der Kuppelwelle 40 dient. Die Lagerbohrung 44 führt auf der Seite der Grundplatte 41, die dem rohrförmigen Mittelstück 35 zugekehrt ist, durch einen Verstärkungsbereich 45 hindurch, der die Form eines Tafelbergs aufweist.

Außerdem ist die dem rohrförmigen Mittelstück 35 zugekehrte Seite der Grundplatte 41 mit einer Reihe von Rippen 46 versehen, die den Zweck haben, das Mittelstück 35 radial zu fixieren und eine Aufweitung des Schlitzes 36 zu verhindern.

Der Innenraum 43 wird durch einen Deckel 47 verschlossen, dessen Außenkontur der Außenkontur der Gehäusewand 42 folgt. In dem Deckel 47 befindet sich eine Sackbohrung 48, die mit der Lagerbohrung 44 fluchtet. Durch die Sackbohrung 48 entsteht an der Außenseite des an sich dünnwandigen Deckels 47 eine Art Dom 49, in den von oben her eine Rippe 50 einmündet. Durch die Rippe 50 führt eine Bohrung 51 hindurch, die sich bis in eine Sackbohrung 52 fortsetzt, die auf der anderen Seite der sackförmigen Lagerbohrung 48 vorgesehen ist.

Der Deckel 47 ist außerdem mit zwei seitlich vorstehenden Fortsätzen 53 versehen, die mit wulstartigen Rippen 54 an der Außenseite der Gehäuseseitenwand 42 fluchten. Sowohl in den Fortsätzen 53 als auch in den wulstartigen Rippen 54 befinden sich Bohrungen, in die Befestigungsschrauben 60 einschraubbar sind, um den Deckel 47 auf der von der Grundplatte 41 abliegenden Stirnseite der Gehäusewand 42 festzuschrauben.

Die Kuppelwelle 40 gliedert sich in einen zylindrischen Abschnitt 55, dessen Durchmesser dem Durchmesser der Lagerbohrung 44 entspricht, eine daran anschließende Ringnut 56, einen zylindrischen Abschnitt 57 sowie einen länglichen Flachkant 58.

Die Länge des Abschnittes 55 ist so gewählt, dass er nicht nur in der Bohrung 44, sondern auch in der Sackbohrung 48 drehbar gelagert ist. Auf diese Weise ist der Abschnitt 55 der Kuppelwelle 40 beidends aufgenommen.

Der Abschnitt 55 enthält ferner einen in Längsrichtung verlaufenden Schlitz 59, in den ein abgewinkeltes Ende 61 der inneren Federwindung der Spiralfeder 39 eingehängt ist. Schließlich führt durch den Abschnitt 55 eine Querbohrung 62, die im montierten Zustand in einer Drehstellung mit der Bohrung 51 in dem Deckel 47 fluchtet.

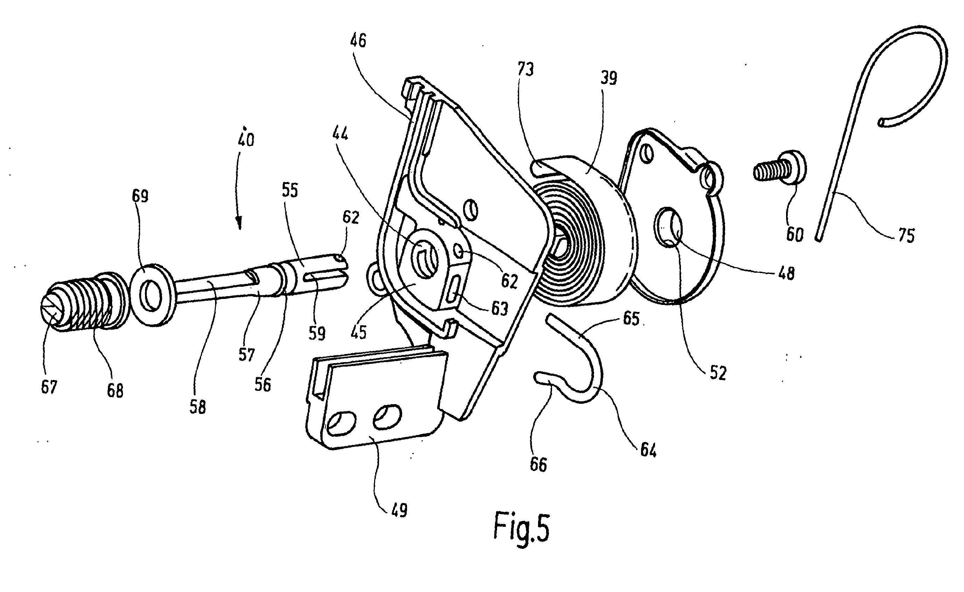

Damit die Kuppelwelle 40 in axialer Richtung festgelegt ist und nicht wandern kann, ist die Ringnut 56 vorgesehen. Die Ringnut 56 befindet sich im montierten Zustand innerhalb der Höhe des Verstärkungsbereiches 45. Dieser ist, wie Fig. 5 erkennen lässt, mit zwei zusätzlichen Bohrungen oder Öffnungen 62 und 63 versehen. Die Bohrungen 62 und 63 verlaufen tangential zu der Längsachse der Lagerbohrung 44 und schneiden diese seitlich an. Sie dienen der Aufnahme eines U-förmigen Federbügels 64, der in die Bohrungen bzw. Öffnungen 62 und 63 einschiebbar ist. Der Federbügel 64 weist einen geraden Schenkel 65 und einen abgewinkelten bzw. leicht geknickten Schenkel 66 auf. Dementsprechend ist die zur Aufnahme des Schenkels 65 vorgesehene Bohrung 62 gerade und kreisrund, während die Öffnung 63, wie gezeigt, im Querschnitt die Gestalt eines Langloches hat. Beide Bohrungen 62 und 63 erstrecken sich über die Lagerbohrung 44 hinaus.

Die beiden Schenkel 65 und 66 sind so gewählt, dass beim Einstecken des Federbügels 64 der geknickte Schenkel 66 nach unten gedrückt wird, um die aus seiner Sicht dickste Stelle der Kuppelwelle 40 passieren zu können. Nach der Montage befindet sich sowohl der gestreckte Schenkel 65 als auch ein entsprechender Bereich des Schenkels 66 innerhalb der Ringnut 56, die einen angepassten Querschnitt hat.

Der Flachkant 58 dient als formschlüssiger Mitnehmer. Mit ihm korrespondiert eine entsprechend konturierte Öffnung 67 in einer Buchse 68, die starr und fest in der rohrförmigen Wickelwelle 20 verankert ist.

Zur Reibungsverminderung der Stirnseite der Buchse 68 gegen die Stirnseite des Verstärkungsbereiches 45 kann noch eine reibungsmindernde, beispielsweise als Teflon bestehende, Anlaufscheibe 69 eingefügt werden, die auf der Kuppelwelle 40 sitzt.

Die Reaktionskraft der Spiralfeder 39 wird von einem Zapfen 71 aufgenommen, der von der Grundplatte 41 ausgeht und innerhalb des becherförmigen Innenraums 43 in Richtung auf den Deckel 47 vorsteht. Im geschlossenen Zustand ragt der Zapfen 71 bis in eine entsprechende Bohrung 72 des Deckels 47. Auf dem Zapfen 71 ist das nach innen umgeschlagene äußere Federende 73 eingehängt.

Das Spiralfedergehäuse 38 stellt, wie unschwer zu erkennen ist, eine vormontierbare selbstständige Einheit dar. Die Montage sieht wie folgt aus:

Zunächst wird die Spiralfeder 39 in den becherförmigen offenen Innenraum 43 eingelegt. Hierbei wird das nach innen umgeschlagene äußere Federende 73 auf dem Widerlagerzapfen 71 verankert. Das abgewinkelte innere Federende 61 befindet sich vor der Lagerbohrung 44. Sodann wird die Kuppelwelle 40 durch die Lagerbohrung 44 eingeführt, und zwar so, dass das abgewinkelte innere Federende 61 in dem Schlitz 59 zu liegen kommt.

Die Kuppelwelle 40 wird soweit in die Lagerbohrung 44 eingesteckt, bis die Ringnut 56 mit den beiden tangentialen Bohrungen 62 und 63 fluchtet. In diese wird der U-förmige Federbügel 64 in der Orientierung gemäß Fig. 5 eingesteckt, bis der abgewinkelte Schenkel 66 hinter der Kuppelwelle 40 verrastet. Die Kuppelwelle 40 ist damit in axialer Richtung festgelegt und an der Spiralfeder 39, die als Blattfeder ausgeführt ist, verankert. Nunmehr kann der Deckel 47 aufgesetzt werden, wobei das über die Flanke der Spiralfeder 39 überstehende Ende des Abschnitts 55 der Kuppelwelle 40 in die Lagerbohrung 48 eindringt. Der Abschnitt 55 ist damit beidseits der Spiralfeder 39 in Lagerbohrungen gelagert.

Als nächster Arbeitsgang wird die Kuppelwelle 40 im Sinne des Aufziehens der Spiralfeder 39 durch eine entsprechende Vorrichtung, beispielsweise einer Handkurbel, in Umdrehungen versetzt. Nach dem Erreichen der vorgegebenen Anzahl von Aufzugsumdrehungen wird die nächste Position gesucht, in der die Bohrung 62 mit der Bohrung 51 fluchtet. Nach dem Erreichen dieses Zustands wird ein drahtförmiger Sicherungsstift 75 eingesteckt, dessen oberes Ende als Griff fungiert und entsprechend halbkreisförmig gebogen ist. Der Sicherungsstift 75 führt durch die Bohrung 51 und die Bohrung 62 bis in die Sackbohrung 52 hinein. Nunmehr kann die Kraft, die bestrebt ist, die Kuppelwelle 40 im Sinne des Aufziehens der Spiralfeder 39 zu drehen, weggenommen werden. Der Sicherungsstift 75 kann nicht herausfallen, weil durch das von der Spiralfeder 39 erzeugte Drehmoment der Sicherungsstift 75 in den oben erwähnten Bohrungen reibschlüssig arretiert ist.

Das Federgehäuse 38 ist damit vollständig montiert und kann als selbstständige Einheit fertig vorgespannt gelagert oder an das Montageband angeliefert werden.

Zur vollständige Komplettierung zum Rollo wird die rohrförmige Wickelwelle 20 zunächst einmal durch Einpressen der Buchse 68 mit dem entsprechenden Mitnehmer versehen. Sodann wird an der Wickelwelle 20 die Rollobahn 17 befestigt und auf der Wickelwelle 20 aufgewickelt. Die auf diese Weise erhaltene Einheit wird von dem einen Ende her in das Mittelstück 35 eingeführt. Der entsprechende Deckel wird auf den Achszapfen 37 aufgefädelt und an dem Mittelstück 35 befestigt.

Sobald die Fertigung bis dahin erfolgt ist, wird das vorgefertigte Federgehäuse 38 genommen und mit der Kuppelwelle voraus mit dem Mittelstück 35 zusammengefügt. Dabei dringt der lange Flachkant 58 in die komplementäre Öffnung 67 der Wickelwelle 20 ein. Hierdurch entsteht eine formschlüssige, in axialer Richtung leicht verschiebliche Verbindung zwischen der Kuppelwelle 40 und der Wickelwelle 20. Danach wird das Spiralfedergehäuse 38 durch nicht weiter gezeigte Schrauben mit dem Mittelstück 35 verschraubt. Eine Darstellung dieser Schrauben ist entbehrlich, da die Lage dieser Schrauben von den Randbedingung abhängig ist und die Lage der Schrauben bzw. die Schrauben selber für das Verständnis der Erfindung nicht von Bedeutung sind.

Nach dem Befestigen des Spiralfedergehäuses 38 an dem Mittelstück 35 kann der Sicherungsstift 75 herausgezogen werden. Die Kraft der aufgewickelten Spiralfeder 39 wirkt nun über die Kuppelwelle 40 unmittelbar auf die Wickelwelle 20.

Ein Herausziehen der Rollobahn 17 bewirkt ein stärkeres Aufziehen der Spiralfeder 39. Der maximal entspannte Zustand entspricht dem Zustand bei der Montage, wenn die Rollbahn 17 vollständig aufgewickelt ist.

Der Innenraum 43, in dem sich die Spiralfeder 39 befindet, ist weitgehend geschlossen. Eine dort vorhandene Fettfüllung, die zwecks Geräuschminderung vorteilhaft ist, kann nicht nach außen heraus sickern.

Die Verankerung des äußeren Federendes an dem Zapfen 71 kann große Kräfte aufnehmen, weil der Zapfen 71, obwohl aus Kunststoff, sowohl auf der Seite der Grundplatte 41 verankert ist, als auch am anderen Ende in der Bohrung 72, die in dem Deckel 45 vorhanden ist.

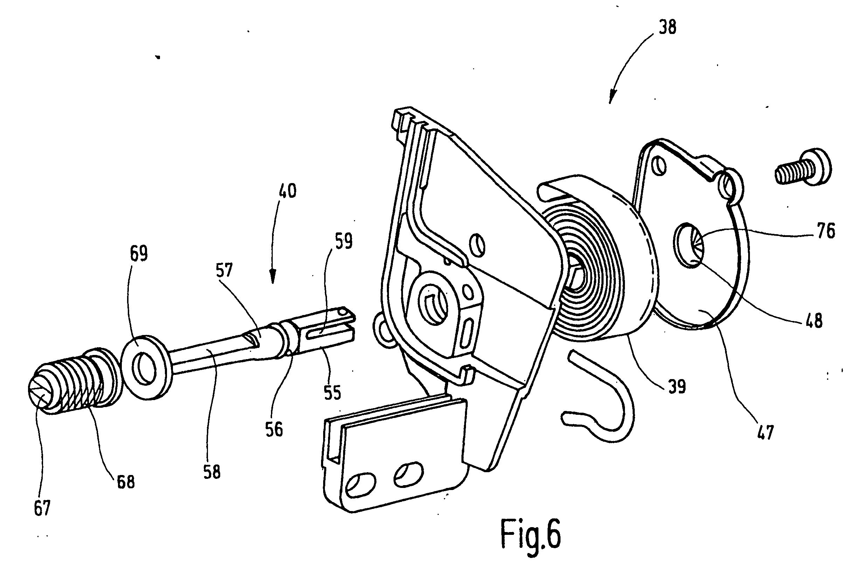

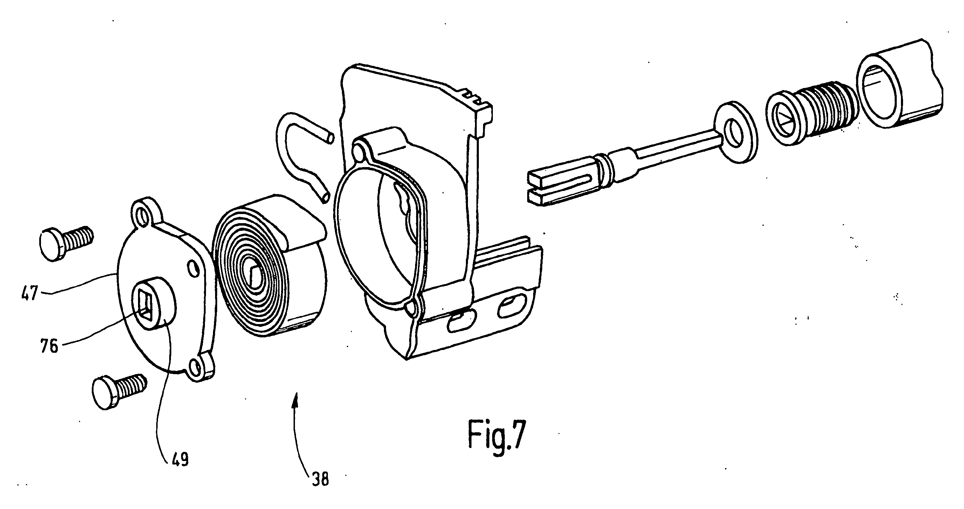

In den Fig. 6 und 7 ist ein weiteres Ausführungsbeispiel gezeigt, dass sich von dem erläuterten Ausführungsbeispiel lediglich durch die Art des Sperrmechanismus unterscheidet. Bei dem vorerwähnten Beispiel wird zum Sperren der aufgezogenen Spiralfeder 39 der Sicherungsstift 75 verwendet. Gemäß den Fig. 6 und 7 ist der Abschnitt 55 mit einem quadratischen Querschnitt versehen. Anstelle der Sackbohrung 48 wird eine Bohrung verwendet, die im inneren Bereich zylindrisch ist und die über eine quadratische Öffnung 76 nach außen führt. Die quadratische Öffnung 76 ist im Querschnitt an den im Querschnitt quadratischen Abschnitt 55 angepasst. Der diagonale Durchmesser der quadratischen Öffnung 76 entspricht dem Durchmesser des zylindrischen Abschnittes, so dass der Abschnitt 55 in dem quadratischen Loch 76 formschlüssig verankert ist, während er sich in dem zylindrischen Teil der Bohrung 48 frei drehen kann.

Die Montage unterscheidet sich geringfügig von dem oben beschriebenen Verfahren.

Nach dem Einfügen der Spiralfeder 39 wird die Kuppelwelle 40 eingesteckt. Anschließend wird die Kuppelwelle, die sich zunächst im zylindrischen Abschnitt 48 frei drehen kann, wie vorher beschrieben, aufgezogen, bis die gewünschte Art der Vorspannung erreicht ist. Sodann wird die Kuppelwelle 40 weiter in Richtung der quadratischen Öffnung 76 vorgeschoben, bis der Abschnitt 55 in die Öffnung 76 eindringt. Damit wird eine Drehverriegelung der Kuppelwelle 40 erreicht. Nunmehr kann der Federbügel 64 eingesteckt werden, der sich jedoch außerhalb der Nut 56 auf dem zylindrischen Teil 57 befindet.

Nach der vollständigen Montage mit der Wickelwelle wird durch ein entsprechendes Werkzeug die Kuppelwelle 40 aus der Öffnung 76 herausgedrückt, bis die Nut 56 mit dem Federbügel 64 verrastet. Dadurch kommt der Abschnitt 55 aus der quadratischen Öffnung frei und kann sich in den zylindrischen Abschnitt 48, wie zuvor erläutert, frei drehen.

Der Vorteil dieser Anordnung besteht in dem Vermeiden eines zusätzlichen Sicherungsstifts.

Es versteht sich natürlich, dass die Kuppelwelle 40 im Bereich des Abschnittes 55 nicht mit einem scharfkantigen Profil, wie gezeigt, versehen wird, sondern mit einem Profil mit abgerundeten Ecken. Eine solche Darstellung wäre jedoch unnötig kompliziert und für die Grundzüge der Erläuterung der Erfindung nicht notwendig.

Das oben erläuterte Beispiel wurde in Verbindung mit einem Heckscheibenrollo gegeben. Es leuchtet ohne weiteres ein, anstelle eines Heckscheibenrollos kann auch ein Seitenfesterrollo verwendet werden. Schließlich bedarf es keiner zeichnerischen Darstellung um zu begreifen, dass das Spiralfedergehäuse 38 nicht notwendigerweise schlussendlich Bestandteil eines kompletten Rollogehäuses sein muss. Vielmehr kann das erläuterte Spiralfedergehäuse 38 auch selbstständig innerhalb der Fahrzeugkarosserie, beispielsweise unterhalb der Hutablage oder sonstwo, an geeigneter Stelle befestigt sein.

Schließlich bedarf es auch keiner Darstellung um zu verstehen, dass ein Spiralfedergehäuse 38, wie es gezeigt ist, an beiden Seiten der Wickelwelle 20 angeordnet werden kann, um die Rückzugskraft zu vergrößern. Insbesondere diese Anordnung hat den Vorteil, dass die Wickelwelle wiederum symmetrisch angeordnet ist und nicht unsymmetrisch aufgrund der axialen Baulänge der Spiralfeder 39.

In der letzten Figur ist schließlich noch ein Trenngitter und eine Laderaumabdeckung veranschaulicht, die ebenfalls rolloartige Gebilde sind, die mit Hilfe eines Federgehäuses 38 vorgespannt werden können, wie es in dem zuvor stehenden Figuren erläutert ist.

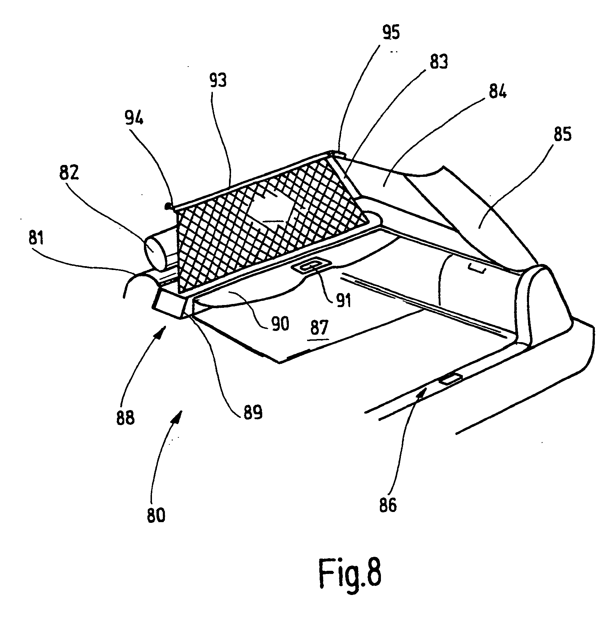

In der Fig. 8 ist ein PKW aufgebrochen dargestellt. Die Figur zeigt einen Ausschnitt aus einer Heckpartie 80 eines Kombi-PKW. In der Figur ist eine Rücksitzlehne 81, einer Rücksitzbank zu erkennen, auf der mehrere Kopfstützen 82 angeordnet sind. Ferner zeigt die Figur einen Blick auf die Innenseite der rechten Seitenwand mit einer dort vorhandenen C-Säule 83, einem hinteren Seitenfenster 84 und einer D-Säule 85, die gleichzeitig einen Teil einer Berandung einer Heckklappenöffnung 86 ist. Die Heckklappe selbst ist nicht dargestellt. Unterhalb des hinteren Seitenfensters 84 befindet sich eine Ladebucht 87, die von der Rückseite der Rücksitzlehne 81 bis zu der Hecköffnung 86 reicht und nach oben durch die Unterkante der beiden Seitenfenster 84 begrenzt ist. Die Unterkante des Seitenfensters 84 entspricht etwa der Oberkante der Rücksitzlehne 81.

Um die Ladebucht 87 nach oben gegen Einblicke zu schützen ist eine Laderaumabdeckungseinrichtung 88 vorgesehen. Zu der Laderaumabdeckungseinrichtung 88 gehören eine Kassette 89 sowie eine Abdeckplane 90, die von Hand ausziehbar ist, wie der Handgriff 91 erkennen lässt.

Zum Aufwickeln der Abdeckplane 90 ist in der Kassette 89 eine zugehörige Wickelwelle ähnlich der Wickelwelle 20 drehbar gelagert. Die Wickelwelle verläuft quer zur Fahrzeuglängsrichtung. Um die Wickelwelle im Sinne des Aufwickelns der Abdeckplane 90 vorzuspannen ist eine Federeinrichtung entsprechend der Federeinrichtung 38,39 nach den vorherigen Ausführungsbeispielen vorgesehen.

In der Kassette 89 befindet sich ferner eine zweite Wickelwelle für ein Trenngitter 92. Auch dieses Trenngitter 92 ist mit einer eigenen Wickelwelle ähnlich der Wickelwelle 20 aus dem vorherigen Ausführungsbeispiel ausgerüstet. Die Wickelwelle des Trenngitters 92 wird mit einer Federeinrichtung 38,39 im Aufwickelsinne des Trenngitters 92 vorgespannt. Die freie Kante des Trenngitters 92 ist mit einer Zugstange 93 versehen, deren pilzförmige Enden 94 in karosseriefester Aufnahmetaschen 95 unterhalb des Daches eingehängt werden können.

Eine Rolloanordnung für ein Kraftfahrzeug weist ein Gehäuse auf, in dem eine Wickelwelle drehbar gelagert ist. An der Wickelwelle ist die Rollobahn befestigt. Ein Deckel des Rollogehäuses wird von einem Federgehäuse gebildet. In dem Federgehäuse sitzt eine Spiralfeder, die die Wickelwelle im Sinne des Aufwickelns der Rollobahn vorspannt. Das Federgehäuse bildet zusammen mit der darin sitzenden Feder und einer Kuppelwelle eine vormontierte Einheit.

## Patentansprüche

1. Rolloanordnung für Kraftfahrzeuge,
mit einer Rollobahn (17),
mit einer Wickelwelle (20), an der mit einer Kante die Rollobahn (17) befestigt ist und die formschlüssig wirkende erste Mitnehmermittel (67) aufweist, um die Wickelwelle (20) im Sinne eines Aufwickelns der Rollobahn (17) auf die Wickelwelle (20) in Umdrehungen zu versetzen,
mit einer Spiralfeder (39), um die Wickelwelle (20) im Sinne des Aufwickelns der Rollobahn (17) auf die Wickelwelle (20) vorzuspannen,
mit einem eigenständigen Spiralfedergehäuse (38), in dem die Spiralfeder (39) einends verankert ist,
mit einer Kuppelwelle (40), die einends mit der Spiralfeder (39) gekuppelt ist und die formschlüssig wirkende zweite Mitnehmermittel (58) zur kinematischen Verbindung mit den ersten Mitnehmermitteln (67) der Wickelwelle (20) aufweist,
**dadurch gekennzeichnet, dass** die Kuppelwelle (40) mit einer Axialsicherung (56,64) versehen ist, die derart gestaltet ist, dass sie zumindest ein Herausziehen der Kuppelwelle (40) aus dem Spiralfedergehäuse (38) blockiert,
wobei die Axialsicherung (56, 64) eine Ringnut (56) in der Kuppelwelle (40) und einen damit zusammenwirkenden Federbügel (64) umfasst, der in einer Bohrung (62, 63) des Spiralfedergehäuses (38) sitzt.

2. Rolloanordnung nach Anspruch 1, **dadurch gekennzeichnet, dass** die Rollobahn (17) aus einer Folie, einem Gewirke oder einem Netz (92) gebildet ist.

3. Rolloanordnung nach Anspruch 1, **dadurch gekennzeichnet, dass** die Rolloanordnung ein Fensterrollo oder ein Abdeckrollo für einen Laderaum (87) oder ein Trenngitter (92) bildet.

4. Rolloanordnung nach Anspruch 1, **dadurch gekennzeichnet, dass** die Wickelwelle (20) rohrförmig ist.

5. Rolloanordnung nach Anspruch 1, **dadurch gekennzeichnet, dass** die Wickelwelle (20) an einem Ende mit einer Lageranordnung (37) versehen ist, mit deren Hilfe die Wickelwelle (20) an dem betreffenden Ende in einer stationären Lageranordnung gelagert ist.

6. Rolloanordnung nach Anspruch 5, **dadurch gekennzeichnet, dass** die Lageranordnung (37) der Wickelwelle (20) von einem Achszapfen oder einer Buchse gebildet ist.

7. Rolloanordnung nach Anspruch 5, **dadurch gekennzeichnet, dass** die stationäre Lageranordnung in einem Gehäuse (21) der Rolloanordnung untergebracht ist.

8. Rolloanordnung nach Anspruch 5, **dadurch gekennzeichnet, dass** die stationäre Lageranordnung in einer Fahrzeugkarosserie vorgesehen ist.

9. Rolloanordnung nach Anspruch 1, **dadurch gekennzeichnet, dass** die ersten Mitnehmermittel (67) eine zu der Wickelwelle (20) koaxiale Öffnung umfassen, die einen von der Kreisform abweichenden Querschnitt aufweist.

10. Rolloanordnung nach Anspruch 9, **dadurch gekennzeichnet, dass** die ersten Mitnehmermittel (67) eine zu einem Flachkant (58) komplementäre Öffnung aufweisen.

11. Rolloanordnung nach Anspruch 10, **dadurch gekennzeichnet, dass** die Öffnung in einer in der Wickelwelle (20) reibschlüssig fest sitzenden Buchse (68) enthalten sind.

12. Rolloanordnung nach Anspruch 1, **dadurch gekennzeichnet, dass** die Spiralfeder (39) von einer Bandfeder gebildet ist.

13. Rolloanordnung nach Anspruch 1, **dadurch gekennzeichnet, dass** die Spiralfeder (39) von einer Drahtfeder gebildet ist.

14. Rolloanordnung nach Anspruch 1, **dadurch gekennzeichnet, dass** die Spiralfeder (39) mit ihrem äußeren Federende (73) in dem Spiralfedergehäuse (38) verankert ist.

15. Rolloanordnung nach Anspruch 1, **dadurch gekennzeichnet, dass** die Spiralfeder (39) mit ihrem inneren Federende (61) mit der Kuppelwelle (40) verbunden ist.

16. Rolloanordnung nach Anspruch 1, **dadurch gekennzeichnet, dass** das Spiralfedergehäuse (38) eine Lagerbohrung (44) zum Durchtritt der Kuppelwelle (40) aufweist.

17. Rolloanordnung nach Anspruch 1, **dadurch gekennzeichnet, dass** die Kuppelwelle (40) der drehbaren Lagerung des betreffenden Endes der Wickelwelle (20) dient.

18. Rolloanordnung nach Anspruch 1, **dadurch gekennzeichnet, dass** das Spiralfedergehäuse (38) zweiteilig ist, wobei ein Teil (41,42) becherartig und der andere Teil (47) einen Deckel für den becherartigen Teil (41,42) bildet.

19. Rolloanordnung nach Anspruch 1, **dadurch gekennzeichnet, dass** die Wickelwelle (20) an beiden Enden mittels der Spiralfeder (39) und dem Spiralfedergehäuse (38) drehbar gelagert ist.

20. Rolloanordnung nach Anspruch 1, **dadurch gekennzeichnet, dass** die Spiralfeder (39) mit dem Spiralfedergehäuse (38) eine vormontierte Einheit bildet.

21. Rolloanordnung nach Anspruch 1, **dadurch gekennzeichnet, dass** der Spiralfeder (39) eine lösbare Sperreinrichtung (75,76) zugeordnet ist, die dazu eingerichtet ist, die Spiralfeder (39) im aufgezogenen Zustand gegen Entspannen zu sichern.

22. Rolloanordnung nach Anspruch 21, **dadurch gekennzeichnet, dass** die Sperreinrichtung (75) einen Sperrstift umfasst, der herausziehbar in einer Bohrung (51) des Spiralfedergehäuses (38) sitzt.

23. Rolloanordnung nach Anspruch 21, **dadurch gekennzeichnet, dass** die Sperreinrichtung (75) eine profilierte Öffnung (76) und ein im Querschnitt daran angepasstes Ende (55) der Kuppelwelle (40) umfasst.

24. Rolloanordnung nach Anspruch 21, **dadurch gekennzeichnet, dass** die Kuppelwelle (40) eine zum Zusammenwirken mit der Sperreinrichtung (75) vorgesehene Öffnung (62) enthält.

25. Rolloanordnung nach Anspruch 1, **dadurch gekennzeichnet, dass** die Kuppelwelle (40) axial gesichert in dem Spiralfedergehäuse (38) gelagert ist.

26. Rolloanordnung nach Anspruch 1, **dadurch gekennzeichnet, dass** ein Rollogehäuse (21) mit einem Rolloschlitz (37) vorhanden ist, und dass wenigstens ein seitlicher Deckel des Rollogehäuses (21) von dem Spiralfedergehäuse (38) gebildet ist.

## Claims

1. Roller blind arrangement for motor vehicles,
with a blind sheet (17),
with a winding shaft (20), to which the blind sheet (17) is fastened at one edge and which has positive-acting first entrainment elements (67) to set the winding shaft (20) in rotation in the sense of winding up the blind sheet (17) onto the winding shaft (20), with a spiral spring (39) to bias the winding shaft (20) in the sense of winding the blind sheet (17) onto the winding shaft (20),
with a stand-alone spiral spring casing (38), in which the spiral spring (39) is anchored at one end,
with a coupling shaft (40), which is coupled to the spiral spring (39) at one end and has positive-acting second entrainment elements (58) for kinematic connection to the first entrainment elements (67) of the winding shaft (20),
**characterised in that**
the coupling shaft (40) is provided with an axial locking arrangement (56, 64), which is configured such that it blocks the coupling shaft (40) from at least being pulled out of the spiral spring casing (38),
wherein the axial locking arrangement (56, 64) comprises an annular groove (56) in the coupling shaft (40) and a spring clip (64) cooperating with this, which sits in a hole (62, 63) of the spiral spring casing (38).

2. Roller blind arrangement according to claim 1, **characterised in that** the blind sheet (17) is formed from a film, a knitted fabric or a mesh (92).

3. Roller blind arrangement according to claim 1, **characterised in that** the roller blind arrangement forms a window roller blind or a roller blind for covering a cargo area (87) or a partition grating (92).

4. Roller blind arrangement according to claim 1, **characterised in that** the winding shaft (20) is tubular.

5. Roller blind arrangement according to claim 1, **characterised in that** the winding shaft (20) is provided at one end with a mounting arrangement (37), by means of which the winding shaft (20) is mounted in a fixed mounting arrangement on the respective end.

6. Roller blind arrangement according to claim 5, **characterised in that** the mounting arrangement (37) of the winding shaft (20) is formed by a pivot or a bushing.

7. Roller blind arrangement according to claim 5, **characterised in that** the fixed mounting arrangement is housed in a casing (21) of the roller blind arrangement.

8. Roller blind arrangement according to claim 5, **characterised in that** the fixed mounting arrangement is provided in a vehicle body.

9. Roller blind arrangement according to claim 1, **characterised in that** the first entrainment elements (67) comprise an opening, which is coaxial to the winding shaft (20) and has a cross-section deviating from a circular shape.

10. Roller blind arrangement according to claim 9, **characterised in that** the first entrainment elements (67) have an opening complementary to a flat-edged shape (58).

11. Roller blind arrangement according to claim 10, **characterised in that** the opening is contained in a bushing (68) sitting firmly frictionally engaged in the winding shaft (20).

12. Roller blind arrangement according to claim 1, **characterised in that** the spiral spring (39) is formed by a flat spring.

13. Roller blind arrangement according to claim 1, **characterised in that** the spiral spring (39) is formed by a wire spring.

14. Roller blind arrangement according to claim 1, **characterised in that** the spiral spring (39) is anchored in the spiral spring casing (38) at its outer spring end (73).

15. Roller blind arrangement according to claim 1, **characterised in that** the spiral spring (39) is connected to the coupling shaft (40) at its inner spring end (61).

16. Roller blind arrangement according to claim 1, **characterised in that** the spiral spring casing (38) has a bearing hole (44) for the coupling shaft (40) to pass through.

17. Roller blind arrangement according to claim 1, **characterised in that** the coupling shaft (40) serves to rotatably mount the respective end of the winding shaft (20).

18. Roller blind arrangement according to claim 1, **characterised in that** the spiral spring casing (38) is in two parts, wherein one part (41, 42) is cup-like and the other part (47) forms a cover for the cup-like part (41, 42).

19. Roller blind arrangement according to claim 1, **characterised in that** the winding shaft (20) is rotatably mounted at both ends by means of the spiral spring (39) and the spiral spring casing (38).

20. Roller blind arrangement according to claim 1, **characterised in that** the spiral spring (39) forms a preassembled unit with the spiral spring casing (38).

21. Roller blind arrangement according to claim 1, **characterised in that** the spiral spring (39) has an associated releasable locking device (75, 76), which is arranged to secure the spiral spring (39) against relaxing when in tightened state.

22. Roller blind arrangement according to claim 21, **characterised in that** the locking device (75) comprises a locking pin, which removably sits in a hole (51) of the spiral spring casing (38).

23. Roller blind arrangement according to claim 21, **characterised in that** the locking device (75) comprises a profiled opening (76) and an end (55) of the coupling shaft (40) adapted to the cross-section of said opening.

24. Roller blind arrangement according to claim 21, **characterised in that** the coupling shaft (40) contains an opening (62) provided to cooperate with the locking device (75).

25. Roller blind arrangement according to claim 1, **characterised in that** the coupling shaft (40) is mounted in the spiral spring casing (38) in an axially locked arrangement.

26. Roller blind arrangement according to claim 1, **characterised in that** a roller blind casing (21) with a roller blind slot (37) is provided, and that at least one lateral cover of the roller blind casing (21) is formed by the spiral spring casing (38).

## Revendications

1. Agencement de store à enrouleur destiné à des véhicules automobiles, comprenant une bande de store (17),
comprenant un axe d'enroulement (20) sur lequel la bande de store (17) est fixée par un bord et qui présente des premiers moyens d'entraînement (67), agissant par complémentarité de formes, pour mettre l'axe d'enroulement (20) en rotation, dans le sens d'un enroulement de la bande de store (17) sur l'axe d'enroulement (20),
comprenant un ressort spiral (39) destiné à mettre l'axe d'enroulement (20) sous précontrainte, dans le sens de l'enroulement de la bande de store (17) sur l'axe d'enroulement (20),
comprenant un boîtier de ressort spiral (38) indépendant, dans lequel le ressort spiral (39) est ancré avec une extrémité,
comprenant un axe d'accouplement (40) qui est accouplé par une extrémité au ressort spiral (39) et qui présente des deuxièmes moyens d'entraînement (58), agissant par complémentarité de formes, pour la liaison cinématique avec les premiers moyens d'entraînement (67) de l'axe d'enroulement (20),
**caractérisé en ce que** l'axe d'accouplement (40) est pourvu d'un moyen de verrouillage axial (56, 64) qui est configuré de manière telle qu'il empêche au moins le retrait de l'axe d'accouplement (40) du boîtier de ressort spiral (38),
sachant que le moyen de verrouillage axial (56, 64) comprend une gorge annulaire (56), située dans l'axe d'accouplement (40), et un étrier élastique (64) qui est monté dans un trou (62, 63) du boîtier de ressort spiral (38).

2. Agencement de store selon la revendication 1, **caractérisé en ce que** la bande de store (17) est constituée d'une feuille, d'un produit à mailles ou d'un filet (92).

3. Agencement de store selon la revendication 1, **caractérisé en ce que** ledit agencement constitue un store à enrouleur pour fenêtre ou un store cache-bagages pour un espace à bagages (87) ou bien un rideau de séparation (92).

4. Agencement de store selon la revendication 1, **caractérisé en ce que** l'axe d'enroulement (20) a une forme tubulaire.

5. Agencement de store selon la revendication 1, **caractérisé en ce que** l'axe d'enroulement (20) est pourvu à une extrémité d'un moyen de support (37) à l'aide duquel l'axe d'enroulement (20) est monté avec l'extrémité correspondante dans un moyen de support stationnaire.

6. Agencement de store selon la revendication 5, **caractérisé en ce que** le moyen de support (37) de l'axe d'enroulement (20) est constitué d'un tourillon ou d'un coussinet.

7. Agencement de store selon la revendication 5, **caractérisé en ce que** le moyen de support stationnaire est logé dans un boîtier (21) de l'agencement de store à enrouleur.

8. Agencement de store selon la revendication 5, **caractérisé en ce que** le moyen de support stationnaire est prévu dans une carrosserie de véhicule.

9. Agencement de store selon la revendication 1, **caractérisé en ce que** les premiers moyens d'entraînement (67) comportent une ouverture qui est coaxiale avec l'axe d'enroulement (20) et qui présente une section transversale qui est différente d'une forme circulaire.

10. Agencement de store selon la revendication 9, **caractérisé en ce que** les premiers moyens d'entraînement (67) présentent une ouverture qui est complémentaire d'un élément plat (58).

11. Agencement de store selon la revendication 10, **caractérisé en ce que** l'ouverture se trouve dans un coussinet (68) monté solidaire par adhérence dans l'axe d'enroulement (20).

12. Agencement de store selon la revendication 1, **caractérisé en ce que** le ressort spiral (39) est constitué d'un ressort à ruban.

13. Agencement de store selon la revendication 1, **caractérisé en ce que** le ressort spiral (39) est constitué d'un ressort à boudin.

14. Agencement de store selon la revendication 1, **caractérisé en ce que** le ressort spiral (39) est ancré avec son extrémité de ressort (73) extérieure dans le boîtier de ressort spiral (38).

15. Agencement de store selon la revendication 1, **caractérisé en ce que** le ressort spiral (39) est relié avec son extrémité de ressort (61) intérieure à l'axe d'accouplement (40).

16. Agencement de store selon la revendication 1, **caractérisé en ce que** le boîtier de ressort spiral (38) présente un alésage de support (44) pour le passage de l'axe d'accouplement (40).

17. Agencement de store selon la revendication 1, **caractérisé en ce que** l'axe d'accouplement (40) sert au support tournant de l'extrémité respective de l'axe d'enroulement (20).

18. Agencement de store selon la revendication 1, **caractérisé en ce que** le boîtier de ressort spiral (38) se présente en deux parties, l'une des parties (41, 42) ayant la forme d'un godet et l'autre partie (47) constituant un couvercle pour la partie (41, 42) conformée en godet.

19. Agencement de store selon la revendication 1, **caractérisé en ce que** l'axe d'enroulement (20) est monté tournant à ses deux extrémités au moyen du ressort spiral (39) et du boîtier de ressort spiral (38).

20. Agencement de store selon la revendication 1, **caractérisé en ce que** le ressort spiral (39) forme une unité préassemblée avec le boîtier de ressort spiral (38).

21. Agencement de store selon la revendication 1, **caractérisé en ce qu'**est associé au ressort spiral (39), un dispositif de blocage (75, 76) libérable qui est agencé pour empêcher la détente du ressort spiral (39) lorsque celui-ci est à l'état tendu.

22. Agencement de store selon la revendication 21, **caractérisé en ce que** le dispositif de blocage (75) comprend une tige de blocage qui est montée avec possibilité de retrait dans un alésage (51) du boîtier de ressort spiral (38).

23. Agencement de store selon la revendication 21, **caractérisé en ce que** le dispositif de blocage (75) comprend une ouverture (76) profilée et une extrémité (55) de l'axe d'accouplement (40) dont la section transversale est adaptée à l'ouverture.

24. Agencement de store selon la revendication 21, **caractérisé en ce que** l'axe d'accouplement (40) comporte une ouverture (62) destinée à coopérer avec le dispositif de blocage (75).

25. Agencement de store selon la revendication 1, **caractérisé en ce que** l'axe d'accouplement (40) est monté avec verrouillage axial dans le boîtier de ressort spiral (38)

26. Agencement de store selon la revendication 1, **caractérisé en ce qu'**il est prévu un boîtier de store à enrouleur (21), doté d'une fente de passage de store (37), et **en ce qu'**au moins un couvercle latéral du boîtier de store (21) est formé par le boîtier de ressort spiral (38).
